# NEUE EUROPÄISCHE PATENTSCHRIFT

(11) **EP 0 724 140 B2**
(45) Veröffentlichungstag und Bekanntmachung des Hinweises auf die Entscheidung über den Einspruch: **04.04.2007**
(45) Hinweis auf die Patenterteilung: 18.09.2002
(21) Anmeldenummer: 95116924.2
(22) Anmeldetag: 27.10.1995
(51) Int. Cl.: G01F 23/26

(54) **Verfahren und Anordnung zur Auswertung der Signale eines kapazitiven Füllstandsensors**
Method and device for signal evaluation of a capacitive filling level sensor
Procédé et dispositif pour l'évaluation des signaux d'un capteur de niveau capacitif

(30) Priorität: 25.01.1995 DE 19502195
(43) Veröffentlichungstag der Anmeldung: 31.07.1996
(73) Patentinhaber: VEGA Grieshaber KG, 77709 Wolfach (DE)
(72) Erfinder: Raffalt, Felix, Dipl.-Ing., D-77716 Fischerbach (DE); Wöhrle, Siegbert, Dipl.-Ing., D-77761 Schiltach (DE)
(74) Vertreter: Patentanwälte Westphal, Mussgnug & Partner

(56) Entgegenhaltungen:
- EP-A- 0 470 483
- WO-A-90/13797
- DE-A- 2 819 731
- DE-A- 4 203 725
- DE-A- 4 217 305
- DE-A- 4 235 243
- DE-A- 4 244 739

## Beschreibung

Die Erfindung betrifft ein Verfahren und eine Anordnung zum Auswerten der Signale eines kapazitiven Füllstandsensors gemäß dem Oberbegriff der Ansprüche 1 und 2.

Kapazitive Füllstandsensoren erzeugen in Abhängigkeit von der Art des sie bedeckenden Füllgutes unterschiedlich große Ausgangsignale. Die Höhe des Ausgangssignals wird zwar in erster Linie durch die Dielektrizitätskonstante des Füllgutes bestimmt; daneben aber auch durch dessen ohmschen Leitwert. Da unbedeckte Sensoren, welche einen dünnen Überzug von leitfähigem Füllgut aufweisen, wesentlich höhere Signalwerte liefern als bei einer vollständigen Bedeckung mit einem Füllgut von geringer Dielektrizitätskonstante, ist ein einheitlicher Abgleich der Ausgangsignalschaltstufe, die zur Erzeugung des binären Bedeckt- bzw. Unbedeckt-Signals dient, nicht durchführbar. Bei bisher bekannten kapazitiven Füllstandgrenzschaltern ist daher zur Inbetriebnahme jeweils individuell durch Befüllung des zu messenden Behälters der füllgutspezifische Signalhub zu bestimmen und dementsprechend die Ausgangsignalschaltstufe abzugleichen.

Des weiteren besteht das Problem, daß viskose Füllgüter ab einem gewissen spezifischen Leitwert nicht mehr messbar sind, da zwischen der Signalamplitude eines vollständig bedeckten und eines lediglich mit anhaftendem Füllgut überzogenen Sensors kein sicher auswertbarer Unterschied mehr auftritt.

Zur Lösung der oben aufgeführten Probleme werden kapazitive Sensoren verwendet, bei denen zwischen der sensitiven Elektrodenspitze und der Behälterwand eine als Schirmsegment ausgebildete Zusatzelektrode angebracht ist.

Aus der deutschen Patentschrift DE 2 819 731 C1 ist eine Anordnung zur kapazitiven Füllstandmessung bekannt, bei der das Schirmsegment, also die Zusatzelektrode, mit virtuellem Erdpotential beschaltet ist und ausschließlich der Scheinstrom zwischen hochfrequenzsignalgespeister Sensorspitze und Behältererde ausgewertet wird. Dieses Verfahren erweitert den Anwendungsbereich bezüglich viskoser, leitfähiger Füllgüter, weist jedoch den Nachteil auf, daß für hochleitfähige Füllgüter Schirmsegmente von erheblicher Länge benötigt werden und ein füllgutspezifischer Schaltpunktabgleich nach wie vor erforderlich ist.

Aus der deutschen Offenlegungsschrift DE 4 217 305 A1 ist ein Niveauschalter bekannt, bei dem die Sensorspitzen- und Schirmsegmentimpedanz Bestandteil eines Hochfrequenz RC-Oszillators sind, wobei das Schirmsegment mit einer zur Sensorspitze gegenphasigen Spannung beschaltet wird. Diese Anordnung ermöglicht den abgleichfreien Betrieb des kapazitiven Sensors. Nachteilig ist, daß die kapazitiven Sensoren geometrisch nicht frei gestaltbar sind, sondern einen festgelegten koppelkapazitätsarmen Aufbau besitzen müssen. Des weiteren muß zur sicheren Detektion hochleitfähiger, viskoser Füllgüter das Schirmsegment konduktiv leitend ausgeführt sein, so dass eine korrosionsschützende Kunststoffummantelung nicht angebracht werden kann.

Weitere Verfahren und Anordnungen zur kapazitiven Füllstandmessung sind aus EP 0 470 483 A1, DE 42 35 243 A1 sowie WO 90/13797 bekannt.

Aufgabe der vorliegenden Erfindung ist es daher, ein Verfahren und eine Anordnung zum Auswerten der Signale eines kapazitiven Füllstandssensors anzugeben, welches ohne Füllgutabgleich sowohl den Füllstand von nichtleitenden Medien mit niedriger Dielektrizitätskonstante wie auch von hochleitfähigen, viskosen Füllgütern in einem Behälter sicher zu detektieren gestattet.

Eine weitere Aufgabe ist es dabei, die Verwendung von längenund geometrievariablen Standardschirmsensoren sowie auch von partiell verpreßten Ex-Zone 0 Elektroden mit hoher Koppelkapazität zu gestatten.

Diese Aufgabe wird durch die kennzeichnenden Merkmale der Ansprüche 1 und 2 gelöst.

Weiterbildungen sind Gegenstand der Unteransprüche.

Vorteil der vorliegenden Erfindung ist, dass es mittels einer relativ einfachen Schaltung möglich wird, mit einem Sensor bekannter Bauart sowohl den Füllstand nichtleitender Medien wie auch den von hochleitfähigen, viskosen Medien zu erfassen.

Ein weiterer Vorteil ist, dass durch das erfindungsgemäße Auswerteverfahren die geometrischen Abmessungen eines in einem Behälter anzubringenden Sensors nicht eingeschränkt werden.

Dabei können auch korrosionsbeständige vollisolierte Sensoren verwendet werden.

Ein weiterer Vorteil der Anordnung ist zudem, daß sie eine niedrige Energieaufnahme aufweist und zu geringen Kosten herstellbar ist.

In einer Ausgestaltung kann das Verfahren und die Anordnung derart erweitert werden, daß vorteilhafterweise interne Sondenkoppelkapazitäten, die das Normalmaß übersteigen, durch eine weitere Diskriminatorschaltung, die in Antiphase zur ersten parallel geschaltet ist, kompensiert werden können.

Grundprinzip der Erfindung ist es, den Sensorspitzenaufladestrom zeitlich durch eine Synchrondemodulatoranordnung zu diskriminieren, wobei die als Schirmsegment ausgebildete Zusatzelektrode zumindest bei Erreichen des Sensorschaltpunktes ein virtuelles Erdpotential führt. Es entsteht auf diese Weise bei bedecktem Sensor ein positiver Demodulatorausgangswert. Die Sensorschaltschwelle läßt sich daher in einfacher Weise füllgutunabhängig auf einen geringen positiven Wert dauerhaft einstellen.

Nachfolgend wird die Wirkungsweise der vorliegenden Erfindung anhand zweier Figuren näher erläutert.

Es zeigen :
- Fig. 1:: einen füllgutüberzogenen kapazitiven Sensor mit Schirmsegment, wobei die füllgutbedingten Impedanzverhältnisse als elektrisches Ersatzschaltbild der Sensordarstellung überlagert sind, und
- Fig. 2:: das Blockschaltbild einer dem erfindungsgemäßen Verfahren entsprechenden Schaltungsanordnung.

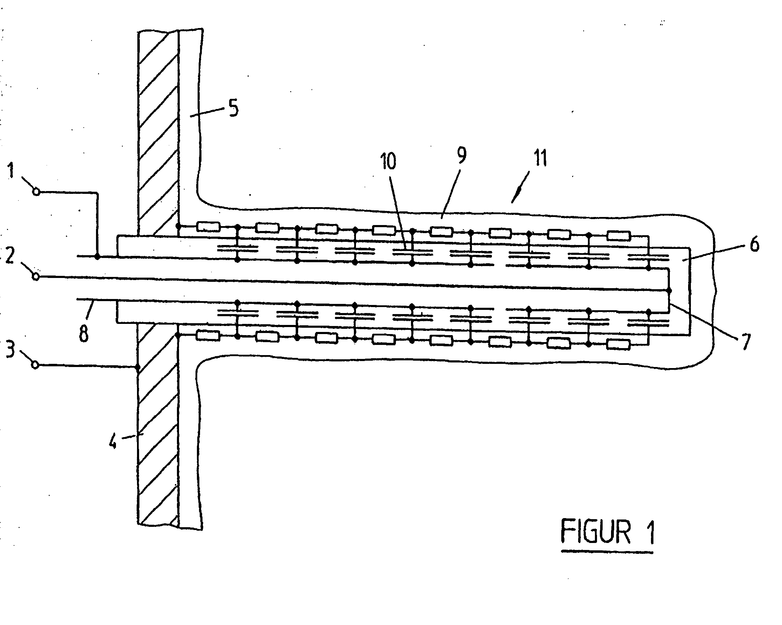

In Figur 1 ist ein kapazitiver Meßsensor 11 dargestellt, welcher eine sensitve Spitze 7 bzw. Meßspitze mit zugehöriger Anschlußklemme 2 sowie eine als Schirmsegment dienende Zusatzelektrode 8 mit Anschlußklemme 1 aufweist. Beide Sensorteile sind von einer Isolationsschicht 6, z.B. Kunststoff, überzogen und bilden mit der über die Anschlußklemme 3 kontaktierbaren, leitenden Behälterwand 4 die eigentliche kapazitive Meßanordnung. Zusätzlich sind in der Figur als überlagerte Darstellung das elektrische Ersatzschaltbild der Sensoranordnung dargestellt. Dabei sind allgemein die kapazitiven Elemente mit dem Bezugszeichen 10 und die ohmschen Elemente mit dem Bezugszeichen 9 beziffert. Außerdem ist in Figur 1 der Fall eines mit Füllgut 5, z.B. viskosem hochleitendem Medium, überzogenen Sensors 11 dargestellt.

Wird zwischen der Anschlußklemme 2 für die Meßspitze und der Anschlußklemme 3 der Behältererdung eine elektrische Spannung angelegt und dabei die Anschlußklemme 1 für das Schirmsegment auf virtuellem Erdpotential gehalten, so ergeben sich die nachfolgend beschriebenen Sensorstromverläufe zwischen der Meßspitze 7 und der Behälterwand 4.
a) Der Sensor 11 ist unbedeckt:
   Es ensteht ein Stromfluß von kurzer Dauer mit geringer Ladungsmenge, da die Sensorgrundkapazität umgeladen werden mußte.
b) Der Sensor 11 ist vollständig von Füllgut bedeckt:
   Es entsteht ein Stromfluß von kurzer Dauer mit mittlerer bis hoher Ladungsmenge, da die füllgutbedingte erhöhte Sensorkapazität umgeladen werden mußte.
c) Der Sensor 11 ist mit nichtleitendem Füllgut überzogen:
   Der Stromfluß entspricht dem von Fall a), da ein nichtleitender Füllgutüberzug die Kapazitätsverhältnisse nur unbedeutend ändert.
d) Der Sensor 11 ist mit leitendem Füllgut überzogen:
   Dies ist der zuvor erwähnte und in Figur 1 dargestellte Fall. Der durch das Füllgut 5 bedingte leitfähige Überzug bildet eine ohmsche Verbindung zwischen der Isolationskapazität der Sensorspitze 7 und der geerdeten Behälterwand 4. Aufgrund des großen Wertes der Sensorspitzenisolationskapazität ergibt sich daher ein Stromfluß von hoher Ladungsmenge. Da sich der ohmsche Füllgutüberzug aus einer Reihenschaltung einer Vielzahl von Teilwiderständen 9 zusammensetzt, welche mit entsprechenden Teilkapazitäten 10 der Schirmsegmentsensorisolation verbunden sind, ergibt sich eine Reihenschaltung von RC-Tiefpaßgliedern, die den zeitlichen Ablauf des Ladungsstromtransports auf dem Sensor bestimmen.

Der Stromfluß zur Behälterwand 4 entspricht daher im ersten Moment nur der Ladungsmenge der Sensorgrundkapazität und geht anschließend in den auf der Sensoroberfläche stattfindenden Ladungstransportvorgang über.

Durch eine Auswertung des zeitlichen Verlaufs des Sensorladungstransports in Verbindung mit der absoluten Größe der übertragenen Ladungsmenge läßt sich daher der tatsächliche Sensorbedeckungszustand sicher feststellen.

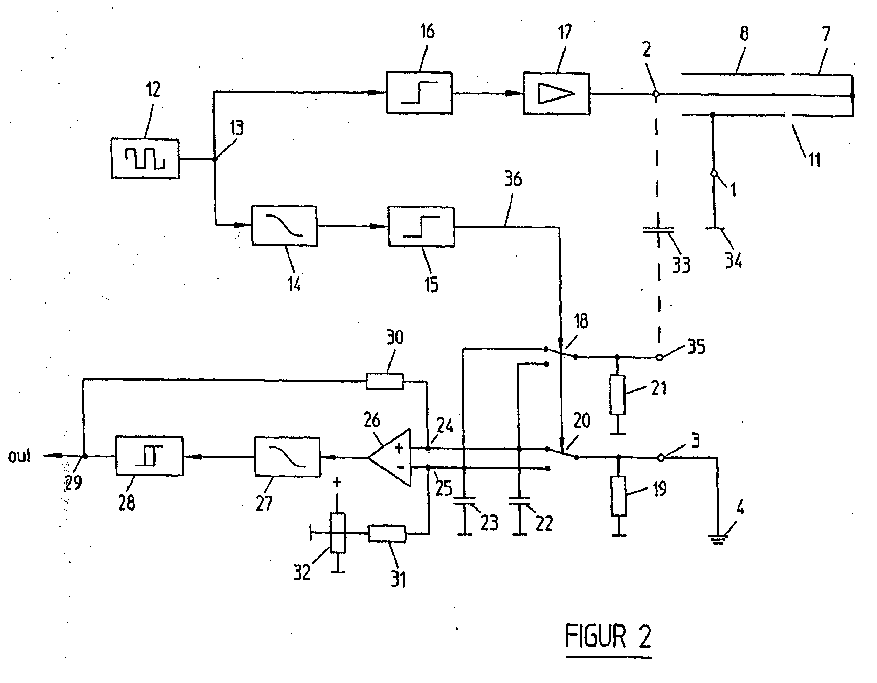

Nachfolgend wird anhand von Figur 2 eine Schaltungsanordnung beschrieben, die es gestattet, die Sensorladungstransportvorgänge in geeigneter Weise auszuwerten. Gleiche Bezugszeichen bezeichnen weiterhin gleiche Elemente mit gleicher Bedeutung.

Mit 11 ist schematisch das Sensorelement mit der Sensorspitze 7, dem Schirmelement 8 sowie den Anschlußklemmen 1, 2 und 3 und der Behältererde 4 dargestellt. Das Bezugszeichen 12 bezeichnet einen Rechteckoszillator, dessen Ausgangsignal 13 einem Komparator 16 und einem als Tiefpaß ausgebildeten Filter 14 zugeführt wird. Der Ausgang des Komparators 16 ist mit dem Eingang eines Sensoransteuerverstärkers 17 verbunden, dessen Ausgangsignal der Anschlußklemme 2 zugeführt wird. Der Ausgang des Filters 14 ist mit dem Eingang eines Komparators 15 verschaltet, dessen Ausgangsignal 36 zwei als Diskriminatoren dienende Umschalteinrichtungen 18 und 20 steuert.

Die Anschlußklemme 1 ist mit einem Bezugspotentialanschluß 34 verbunden. Die Anschlußklemme 3 ist zum einen über einen Widerstand 19 mit Bezugspotential und zum anderen mit der Mittenanschlußklemme der Umschalteinrichtung 20 verschaltet. Die erste Umschaltklemme der Umschalteinrichtung 20 ist zum einen über einen Kondensator 22 mit dem Bezugspotential und zum anderen mit dem positiven Eingang eines als Komparator dienenden Operationsverstärkers 26 verbunden. Ebenso ist die zweite Umschaltklemme der Umschalteinrichtung 20 zum einen über einen Kondensator 23 mit dem Bezugspotential und zum anderen mit dem negativen Eingang des Operationsverstärkers 26 verbunden. Das dem positiven Eingang des Operationsverstärkers 26 zugeführte Signal ist mit dem Bezugszeichen 24 und das dem negativen Eingang zugeführte Signal mit dem Bezugszeichen 25 bezeichnet. Des weiteren wird dem negativen Eingang des Operationsverstärkers 26 über den Widerstand 31 ein mittels Potentiometer 32 einstellbarer Kompensationsstrom zugeführt, um die Sonden-Grundkapazität zu eliminieren. Der Ausgang des Operationsverstärkers 26 ist über ein Filter 27 mit einem hysteresebehafteten Komparator 28 gekoppelt. Dessen Ausgangsignal 29 wird zum einen einem Ausgang OUT und zum anderen über einen Widerstand 30 dem positiven Eingang des Operationsverstärkers 26 zugeführt.

Schließlich kann eine zusätzliche Kompensationskapazität 33 (gestrichelt dargestellt) zwischen die Anschlußklemme 2 und eine Zusatzklemme 35 geschaltet werden. Diese Zusatzklemme 35 ist zum einen über einen Widerstand 21 mit dem Bezugspotential und zum anderen mit der Mittenanschlußklemme der Umschalteinrichtung 18 verbunden. Die erste Umschaltklemme der Umschalteinrichtung 18 ist mit der zweiten Umschaltklemme der Umschalteinrichtung 20 und die zweite Umschaltklemme der Umschalteinrichtung 18 ist mit der ersten Umschaltklemme der Umschalteinrichtung 20 verschaltet.

Der Rechteckoszillator 12 erzeugt ein Ausgangssignal 13 mit einer Wechselspannung von beispielsweise 100 kHz. Dieses wird über den Komparator 16 auf den Eingang des Sensoransteuerverstärkers 17 gegeben, dessen Ausgang über die Anschlußklemme 2 mit der Sensorspitze 7 verbunden ist.

Das Schirmsegment, also die Zusatzelektrode 8, des Sensors 11 ist über die Anschlußklemme 1 mit der Masse 34 der Auswerteschaltung verbunden, die als Bezugspotential dient. Dabei ist diese Masse 34 Bestandteil einer nicht dargestellten, zur Behälterwand 4 potentialgetrennten Stromversorgungseinrichtung.

Die zwischen sensitiver Sensorspitze 7 und Behälterwand 4 fließenden füllgutabhängigen Hochfrequenzströme werden über die Anschlußklemme 3 der als Synchrondemodulator ausgebildeten Umschalteinrichtung 20 zugeführt. Deren Ansteuersignal wird vom Ausgangssignal 13 abgeleitet, indem dieses mittels Tiefpaß 14 verzögert und anschließend vom Komparator 15 in ein steilflankiges als Demodulatorsteuersignal dienendes rechteckförmiges Ausgangssignal 36 zurückgewandelt wird.

Dieses Ausgangssignal 36 dient zur Ansteuerung des Demodulators und weist zum Ausgangsignal des Sensoransteuerverstärkers 17 einen Phasenversatz von beispielsweise 100 ns auf. Der vom Komparator 15 verursachte Laufzeitfehler, welcher in der selben Größenordnung wie der gewünschte Phasenversatz liegen kann, wird durch den im Sensoransteuerzweig angebrachten, gleichartig ausgebildeten Komparator 16 kompensiert.

Die als Synchrondemodulator arbeitende Umschalteinrichtung 20 teilt die sie durchfließenden Sensorladeströme entsprechend dem Zeitverlauf des Ansteuersignals 36 auf und leitet sie über ihre beiden Umschaltausgänge in die Kondensatoren 22 und 23 ab. Diese laden sich dadurch auf Spannungen auf, die als Signale 24, 25 vom Komparator 26 ausgewertet werden.

Sensorumladeströme, die sich räumlich im Behälter ausbilden und daher füllstandrepräsentativ sind, erzeugen aufgrund der kurzen Dauer ihres Ladungstransports im Kondensator 22 eine positive und im Kondensator 23 eine negative Spannung. Hingegen erzeugen Ladeströme, die nur oberflächlich auf dem Sensor fließen und daher von einem Füllgutüberzug verursacht sind, aufgrund des verzögert einsetzenden Ladungstransports zur Behältererde 4 im Kondensator 22 eine negative und dementsprechend im Kondensator 23 eine positive Spannung. Beide Stromarten werden somit dadurch unterschieden, daß zwischen ihrem zeitlich hauptsächlichen Auftreten die Gleichrichtphasenlage des Synchrondemodulators 20 entsprechend dem Phasenversatz des Ansteuersignals 36 umspringt.

Die Eingangspannungsdifferenz des Komparators 26 ist daher positiv, wenn der Sensor 11 füllgutbedeckt ist und negativ, wenn er im nichteingetauchten Zustand lediglich von Füllgutresten überzogen ist.

Da die Grundkapazität des unbedeckten Sensors 11 in Luft bereits eine geringe positive Differenzspannung am Eingang des Komparators 26 erzeugt, wird diesem mittels der Spannungsteilerschaltung des Potentiometers 32 und Widerstand 31 ein entsprechender Kompensationsstrom zugeführt, so daß der Komparatorschaltpunkt erst erreicht wird, wenn der Sensor 11 von einem Medium umgeben ist, dessen Dielektrizitätszahl über 1 liegt.

Der binäre Ausgangswert des Komparators 26 wird zur Integration dem als Tiefpaß ausgebildeten Filter 27 zugeführt und dessen Ausgangsignal vom hysteresebehafteten Komparator 28 in das binäre Sensorausgangsignal 29 gewandelt. Dieses wird zur Bildung einer Schalthysterese mittels Widerstand 30 auf den positiven Eingang des Komparators 26 rückgekoppelt. Auf diese Weise wird ein Hin- und Herschalten des Ausgangsignals 29 bei Füllgutwellenbewegungen und Abtropfvorgängen viskoser Füllgüter vermieden.

Mit Hilfe der zweiten als Synchrondemodulator ausgebildeten Umschalteinrichtung 18, die in Antiphase zur Umschalteinrichtung 20 betrieben wird, ergibt sich ein subtrahierend wirkender Eingang 35, an den bei Bedarf ein Kompensationskondensator 33 anschließbar ist, welcher eine von der Zusatzelektrode 8 nicht neutralisierbare interne Koppelkapazität des Sensors 11 kompensiert. Im einfachsten Fall wird dabei die Umschalteinrichtung 18 vom selben Ausgangssignal 36 wie die Umschalteinrichtung 20 angesteuert, aber die jeweiligen Umschaltkontakte mit dem jeweils anderen Kondensator 22 bzw. 23 verbunden. Auf diese Weise werden entgegengesetzte Ladeströme zu den durch die Umschalteinrichtung 20 erzeugten Ladeströmen erzeugt.

Die an den Anschlußklemmen 3, 35 angeschlossenen Widerstände 19, 21 dienen zur Definition der Eingangsempfindlichkeit sowie der Masseanbindung der Signale 24, 25.

Da bei Erreichen des Schaltpunktes die Differenz der Demodulatorausgangspannungen Null wird, tritt in diesem Fall an der Anschlußklemme 3 kein Hochfrequenzsignalhub auf, d. h. die Erde führt virtuelles Massepotential. Dies bedeutet, daß die Masse 34 demnach gleichfalls virtuelles Erdpotential führt und daher ohne die Notwendigkeit einer Schirmtreibervorrichtung direkt über die Anschlußklemme 1 das Sensorschirmsegment 8 ansteuern kann.

Koppelkapazitäten zwischen Schirmsegment 8 und Behälterwand 4 können somit die Messung nicht beeinflussen, da bei Durchlaufen des Schaltpunktes zwischen ihnen keine Spannung ansteht und daher keine störende Ladungsübertragung stattfinden kann. Ebenso hat die Koppelkapazität zwischen Schirmsegment 8 und sensitiver Meßspitze 7 keine Auswirkung, da die durch sie verursachten Ströme nicht in den Demodulatoreingang fließen können, sondern lediglich den Sensoransteuerverstärker 17 kapazitiv belasten.

Durch die Verwendung zweier in Antiphase betriebener und als Demodulatoren arbeitender Umschalteinrichtungen 18, 20 sowie die Differenzsignalauswertung der symetrisch beschalteten Eingänge des Komparators 26, haben Ladungsinjektionsströme der Umschalteinrichtungen 18, 20 und die Eingangströme des Komparators 26 keinen Einfluß auf den Schaltpunkt. Da aufgrund des phasenselektiven Auswerteverfahrens elektromagnetische Einstrahlungen auf den Sensor 11 nicht zu einem Meßwert demoduliert werden können, ergibt sich eine hohe Einstrahlfestigkeit. Dies bedeutet auch, daß eine gegenseitige Beeinflussung nahe beieinander montierter derartiger Füllstandgrenzschalter nicht auftreten kann.

Aufgrund der Tatsache, daß das Meßverfahren eine Nullpunktdetektion durchführt, kann das Meßergebnis nicht durch Steilheitsfehler verfälscht werden. Es muß daher weder die Amplitude der Sensoransteuerspannung, noch deren Frequenz stabilisiert werden. In Verbindung mit den übrigen Fehlerkompensationsmechanismen ergeben sich daher sehr niedrige Herstellkosten, da zur Realisierung des Verfahrens vergleichsweise wenig Bauelemente benötigt werden und an diese trotz der sehr kurzen Meßimpulslaufzeiten nur geringe Anforderungen zu stellen sind.

Des weiteren verfügt die Meßanordnung über eine geringe Energieaufnahme, so daß deren Anwendung auch in Verbindung mit elektronischen Zweidrahtschaltern möglich ist.

### BEZUGSZEICHENLISTE

- 1: Anschlußklemme
- 2: Anschlußklemme
- 3: Anschlußklemme
- 4: Behälterwand, Bezugselektrode
- 5: Füllgut
- 6: Isolationsschicht
- 7: sensitive Spitze, Meßspitze
- 8: Zusatzelektrode
- 9: Teilwiderstand

- 10: Teilkapazität
- 11: Meßsensor, Sensor
- 12: Rechteckoszillator
- 13: Ausgangssignal
- 14: Filter-, Tiefpaß
- 15: Komparator
- 16: Komparator
- 17: Sensoransteuerverstärker
- 18: Umschalteinrichtung
- 19: Widerstand

- 20: Umschalteinrichtung
- 21: Widerstand
- 22: Kondensator
- 23: Kondensator
- 24: Signal
- 25: Signal
- 26: Operationsverstärker, Komparator
- 27: Filter -, Tiefpaß
- 28: Komparator
- 29: Ausgangssignal

- 30: Widerstand
- 31: Widerstand
- 32: Potentiometer
- 33: Kompensationskapazität
- 34: Masse/Bezugspotential
- 35: Zusatzklemme
- 36: Ansteuer-Signal

- OUT: Ausgang

## Patentansprüche

1. Verfahren zum Auswerten des Signals eines kapazitiven Füllstandsensors mit einer an eine Behälterwand (4) eines Behälters, dessen Füllstand zu messen ist, angeschlossenen Bezugselektrode und einer in dem Behälter angeordneten Meßspitze, der ein Wechselspannungssignal zugeführt wird und die eine Meßelektrode (2) und eine zwischen der Bezugselektrode und der Meßelektrode (2) angeordnete und diesen gegenüber elektrisch isolierte Zusatzelektrode (1, 8) enthält, welche während des Messvorganges auf virtuellen Massepotential (34) gehalten wird, Bestandteil einer zur Behälterwand (4) potentialgetrennten Stromversorgung ist, **dadurch gekennzeichnet, dass** das Wechselspannungssignal ein Rechtecksignal ist, und dass der durch das Wechselspannungssignal erzeugte Sensorspitzenaufladestrom zeitlich diskriminiert wird, wobei die Zusatzelektrode (1, 8) zumindest im Bereich der Detektionsschwelle eines vorgegebenen Füllstandes ein virtuelles Erdpotential führt.

2. Anordnung zur kapazitiven Füllstandmessung mit einer an eine Behälterwand (4) eines Behälters, dessen Füllstand zu messen ist, angeschlossenen Bezugselektrode (3), mit einer Einrichtung (12) zur Erzeugung eines Wechselspannungssignals und mit einer Messspitze (7), der das Wechselspannungssignal zugeführt wird, wobei die Anordnung eine Einrichtung zur Erzeugung eines virtuellen Massepotentials, eine Messelektrode (2) und eine zwischen der Bezugselektrode (3) und der Messelektrode (2) angeordnete und diesen gegenüber elektrisch isolierte Zusatzelektrode (1, 8) enthält, welche während des Messvorganges auf dem virtuellen Massepotential gehalten ist, wobei diese Masse Bestandteil einer zur Behälterwand (4) potentialgetrennten Stromversorgung ist, und wobei zwischen der Meßelektrode (2) und der Bezugselektrode (3) eine kapazitive Kopplung vorgesehen ist, **dadurch gekennzeichnet , dass** als Wechselspannungssignal ein Rechtecksignal vorgesehen ist, und dass eine Diskriminatorschaltung eingangsseitig an die mit der Behälterwand (4) verbundene Bezugselektrode (3) angeschlossen ist zur Auswertung des zeitlichen Verlaufs des Ladestroms der Messspitze (7).

3. Anordnung nach Anspruch 2, **dadurch gekennzeichnet, dass** die Einrichtung zur Erzeugung eines Wechselspannungssignals einen Oszillator (12) aufweist, und dass die Diskriminatorschaltung eine Umschalteinrichtung (20) aufweist, die in Abhängigkeit des Ausgangssignals (13) des Oszillators (12) gesteuert wird, wobei die Umschalteinrichtung (20) das auszuwertende Signal einem ersten bzw. zweiten Kondensator (22, 23) zuführt, und dass die Spannungen an den Kondensatoren (22, 23) einem Komparator (26) zugeführt werden, dessen Ausgangssignal das Füllstandsignal repräsentiert.

4. Anordnung nach Anspruch 3, **dadurch gekennzeichnet, dass** dem Komparator (26) ein Filter (27) und ein hysteresebehafteter Komparator (28) nachgeschaltet ist, und dass das am hysteresebehafteten Komparator (28) abgreifbare Ausgangssignal (29) mit dem positiven Eingang des Komparators (26) rückgekoppelt wird.

5. Anordnung nach Anspruch 3 oder 4, **dadurch gekennzeichnet, dass** eine weitere Umschalteinrichtung (18) vorgesehen ist, die von dem Ausgangssignal (13) des Oszillators (12) gesteuert wird und das über eine Kompensationskapazität (33) gekoppelte Eingangssignal der Meßspitze (7) jeweils in Antiphase den beiden Kondensatoren (23, 22) zuführt.

6. Anordnung nach einem der Ansprüche 3 bis 5, **dadurch gekennzeichnet, dass** eine Einrichtung (31, 32) zur Erzeugung eines Kompensationsstroms vorgesehen ist, der einem der Eingänge des Komparators (26) zuführbar ist.

7. Anordnung nach einem der Ansprüche 3 bis 5, **dadurch gekennzeichnet, dass** das vom Oszillator (12) der Meßspitze (7) zugeführte Signal über einen zweiten Komparator (16) und nachgeschalteten Sensoransteuerverstärker (17) geführt ist.

8. Anordnung nach einem der Ansprüche 3 bis 7, **dadurch gekennzeichnet, dass** das vom Oszillator (12) den Umschalteinrichtungen (18, 20) zugeführte Ausgangssignal (13) über ein Filter (14) mit nachgeschalteten dritten Komparator (15) geführt ist.

## Claims

1. A method for evaluating the signal of a capacitive filling level sensor, having a reference electrode connected to a container wall (4) of a container whose filling level is to be measured and a measuring tip disposed in the container, to which measuring tip an alternating voltage signal is supplied and which contains a measuring electrode (2) and an additional electrode (1, 8) that is disposed between the reference electrode and the measuring electrode (2) and is electrically insulated with respect to them and that is kept at a virtual earth potential (34) during the measuring operation, this earth being a component of a power supply that has potential separation with respect to the container wall (4),
**characterised in that** the alternating voltage signal is a square-wave signal,
**and in that** the sensor tip charging current produced by the alternating voltage signal is discriminated with respect to time, the additional electrode (1, 8) conveying a virtual earth potential at least in the region of the detection threshold of a predetermined filling level.

2. An arrangement for the capacitive measurement of the filling level, having a reference electrode (3) connected to a container wall (4) of a container whose filling level is to be measured, having a device (12) for generating an alternating voltage signal and having a measuring tip (7) to which the alternating voltage signal is supplied,
the arrangement containing a device for generating a virtual earth potential, a measuring electrode (2) and an additional electrode (1, 8) that is disposed between the reference electrode (3) and the measuring electrode (2) and is electrically insulated with respect to them, and that is kept at virtual earth potential during the measuring operation,
this earth being a component of a power supply that has potential separation with respect to the container wall (4), and a capacitive coupling being provided between the measuring electrode (2) and the reference electrode (3),
**characterised in that** a square-wave signal is provided as the alternating voltage signal,
**and in that** a discriminator circuit is connected at the input side to the reference electrode (3) connected to the container wall (4) for the evaluation of the temporal course of the charging current of the measuring tip (7).

3. An arrangement according to Claim 2,
**characterised in that** the device for producing an alternating voltage signal comprises an oscillator (12),
**and in that** the discriminator circuit comprises a change-over device (2), which is controlled as a function of the output signal (13) of the oscillator (12), wherein the changeover device (20) supplies the signal to be evaluated to a first or a second capacitor (22, 23),
**and in that** the voltages at the capacitors (22, 24) are supplied to a comparator (26), the output signal of which represents the filling level signal.

4. An arrangement according to Claim 3,
**characterised in that** a filter (27) and a hysteresis-afflicted comparator (28) is connected after the comparator (26)
**and in that** the output signal (29) that can be tapped at the hysteresis-afflicted comparator (28) is fed back to the positive input of the comparator (26).

5. An arrangement according to Claim 3 or 4,
**characterised in that** a further change-over device (18) is provided, which is controlled by the output signal (13) of the oscillator (12) and supplies the input signal of the measuring tip (7) that is coupled via a compensation capacitor (33) in antiphase to the two capacitors (23, 22).

6. An arrangement according to one of Claims 3 to 5,
**characterised in that** a device (31, 32) for generating a compensation current is provided, which can be supplied to one of the inputs of the comparator (26).

7. An arrangement according to one of Claims 3 to 5,
**characterised in that** the signal supplied by the oscillator (12) to the measuring tip (7) is conveyed via a second comparator (16) and a post-connected sensor control amplifier (17).

8. An arrangement according to one of Claims 3 to 7,
**characterised in that** the output signal (13) supplied by the oscillator (12) to the change-over devices (18, 20) is conveyed via a filter (14) with the post-connected third comparator (15).

## Revendications

1. Procédé d'exploitation du signal d'un capteur de niveau de remplissage, capacitif, comprenant une électrode de référence reliée à une paroi (4) d'un réservoir dont on mesure le niveau de remplissage, ainsi qu'une pointe de mesure qui reçoit un signal de tension alternative et qui comporte une électrode de mesure (2) et une électrode complémentaire (1, 8) isolée électriquement par rapport à l'électrode de mesure et installée entre l'électrode de référence et l'électrode de mesure (2), cette électrode complémentaire étant tenue à un potentiel de masse virtuel (34) pendant l'opération de mesure, cette masse étant une partie constitutive d'une alimentation en courant séparée en potentiel de la paroi de réservoir (4),
**caractérisé en ce que**
le signal de tension alternative est un signal rectangulaire, le courant de charge de la pointe de capteur créé par le signal de tension alternative est discriminé dans le temps, et l'électrode complémentaire (1, 8) conduit un potentiel de masse virtuel au moins au niveau du seuil de détection d'un niveau de remplissage prédéterminé.

2. Montage de mesure capacitive de niveau de remplissage, comportant une électrode de référence (3) reliée à une paroi (4) d'un réservoir dont on veut mesurer le niveau de remplissage, une installation (12) créant un signal de tension alternative, une pointe de mesure (7) qui reçoit le signal de tension alternative, une installation générant un potentiel de masse virtuel, une électrode de mesure (2), et une électrode complémentaire (1, 8) installée entre l'électrode de référence (3) et l'électrode de mesure (2) en étant isolée électriquement par rapport à celles-ci et qui est tenue à un potentiel de masse virtuel pendant l'opération de mesure, cette masse étant une partie constitutive d'une alimentation en courant séparée en potentiel de la paroi de réservoir (4), et un couplage capacitif étant produit entre l'électrode de mesure (2) et l'électrode de référence (3),
**caractérisé en ce qu'**
le signal de tension alternative est un signal rectangulaire, et
un circuit de discriminateur est relié en entrée à l'électrode de référence (3) reliée à la paroi (4) du réservoir pour exploiter l'évolution dans le temps du courant de charge de la pointe de mesure (7).

3. Montage selon la revendication 1,
**caractérisé en ce que**
l'installation créant un signal de tension alternative comprend un oscillateur (12), le circuit de discriminateur comporte une installation de commutation (20) commandée en fonction du signal de sortie (13) de l'oscillateur (12), l'installation de commutation (20) appliquant le signal à exploiter à un premier ou à un second condensateur (22, 23), et les tensions sur les condensateurs (22, 23) sont appliquées à un comparateur (26) dont le signal de sortie représente le signal de niveau de remplissage.

4. Montage selon la revendication 3,
**caractérisé en ce que**
le comparateur (26) est suivi d'un filtre (27) et d'un comparateur (28) avec hystérésis et le signal de sortie (29) pris sur le comparateur (28) à hystérésis est couplé en réaction à l'entrée positive du comparateur (26).

5. Montage selon l'une quelconque des revendications 3 ou 4,
**caractérisé par**
une autre installation de commutation (18) commandée par le signal de sortie (13) de l'oscillateur (12) et qui applique le signal d'entrée de la pointe de mesure (7) couplée par une capacité de compensation (33), chaque fois en opposition de phase aux deux condensateurs (23, 22).

6. Montage selon l'une quelconque des revendications 3 à 5,
**caractérisé par**
une installation (31, 32) pour créer un courant de compensation appliqué à l'une des entrées du comparateur (26).

7. Montage selon l'une quelconque des revendications 3 à 5,
**caractérisé en ce que**
le signal appliqué par l'oscillateur (12) à la pointe de mesure (7) est appliqué à un second comparateur (16) et à un amplificateur de commande de capteur (17) en aval.

8. Montage selon l'une quelconque des revendications 3 à 7,
**caractérisé en ce que**
le signal de sortie (13) appliqué par l'oscillateur (12) aux installations de commutation (18, 20) arrive par l'intermédiaire d'un filtre (14) à un troisième comparateur (15) installé en aval.
